# EUROPÄISCHE PATENTANMELDUNG

(11) **EP 0 706 813 A2**
(43) Veröffentlichungstag der Anmeldung: **17.04.1996**
(21) Anmeldenummer: 95115823.7
(22) Anmeldetag: 07.10.1995
(51) Int. Cl.: B01D 53/50, B01D 53/68, B01J 20/26

(54) **Verfahren zur Absorption von sauren Gasen in Gegenwart von Carboxylgruppen tragenden Polymeren**

(30) Priorität: 15.10.1994 DE 4436891
(71) Anmelder: BASF AKTIENGESELLSCHAFT, D-67056 Ludwigshafen (DE); FHW-Brenntechnik GmbH, D-84494 Neumarkt-Sankt Veit (DE)
(72) Erfinder: Ruland, Alfred, Dr., D-69198 Schriesheim (DE); Klingelhöfer, Paul, Dr., D-68161 Mannheim (DE); Kistenmacher, Axel, Dr., D-67061 Ludwigshafen (DE); Friedl, Andreas, D-84489 Burghausen (DE); Weichs, Hermann, D-84494 Neumarkt-St. Veit (DE)
(74) Vertreter: Wicke, Reinhard, Dr.

(57) **Zusammenfassung**

Verfahren zur Absorption von sauren Gasen mit Absorptionsmitteln auf Basis von Calciumhydroxid oder Calciumcarbonat, dadurch gekennzeichnet, daß man die Absorption in Gegenwart von Carboxylgruppen tragenden Polymeren vornimmt.

## Beschreibung

Die vorliegende Erfindung betrifft ein verbessertes Verfahren zur Absorption von sauren Gasen mit Absorptionsmitteln auf Basis von Calciumhydroxid oder Calciumcarbonat. Weiterhin betrifft die Erfindung die Verwendung von Carboxylgruppen tragenden Polymeren zur Erhöhung des Absorptionsvermögens dieser Absorptionsmittel.

Saure Gase enthaltende Rauchgase entstehen u.a. beim Betreiben von Energieerzeugungsanlagen, Anlagen zur thermischen Rückstandsentsorgung, keramischen Brennöfen und Anlagen zur rohstofflichen Verwertung von Altmaterialien.

In den genannten Anlagen können saure Gase wie Schwefeldioxid, Chlorwasserstoff, Fluorwasserstoff und Schwefeltrioxid neben Dioxinen, Furanen, Kohlenmonoxid, organischen Lösungsmitteln und Stäuben in das Rauchgas freigesetzt werden. Hohe Emissionen von sauren Gasen, wie sie insbesondere bei der Verbrennung fossiler Brennstoffe freigesetzt werden, können zu wachsenden Schäden an Natur, Bauwerken und Maschinen führen.

Eine wirksame Methode, die Emission dieser sauren Gase zu minimieren, stellt die Reinigung des Rauchgases dar. Um Anlagen zur Rauchgasreinigung wirtschaftlich betreiben zu können, ist eine möglichst hohe Effektivität bei der Abscheidung der sauren Gase anzustreben, um mit einer entsprechend klein dimensionierten Anlage die geforderten Grenzwerte beim gereinigten Gas einhalten zu können. Eine kleinere Dimensionierung der Rauchreinigungsanlage bringt wesentliche Vorteile mit sich wie niedrige Investitionskosten, geringe Betriebskosten und weniger Platzbedarf. Weiterhin erlaubt eine erhöhte Effektivität bei vorgegebener Anlagengröße, daß das gereinigte Gas wesentlich geringere Anteile an Restgasen enthält.

Insbesondere für die Reinigung von Rauchgasen von Schwefeldioxid ist eine Vielzahl von technischen Prozessen bekannt. Technisch realisiert sind die Trockenabsorption auf Basis von Kalkhydrat sowie nasse Verfahren unter Verwendung von Soda, Kalkmehl, Kalkhydrat oder Ammoniak als Absorptionsmittel. Als Rückstände fallen bei diesen Prozessen vor allem Gips, Schwefel oder Ammoniumsulfat an. Großtechnisch durchgesetzt haben sich insbesondere die Absorptionsverfahren mit Calciumhydroxid- und Calciumcarbonatsuspensionen als Absorptionsmittel.

Bei den Waschverfahren auf Basis von Calciumcarbonat- bzw. Calciumhydroxid läuft die Umsetzung des Schwefeldioxids in der wäßrigen Phase als Ionen-Reaktion ab. Das eingesetzte Calciumcarbonat bzw. -hydroxid läßt sich bei geeigneter Reaktionsführung quantitativ mit dem Schwefeldioxid umsetzen und durch Oxidation mit Luft in Gips umwandeln.

Bei einer Trockensorptionsanlage, wie sie beispielsweise in der DE-A 34 43 832 und DE-A 36 41 205 beschrieben ist, wird zunächst ein inertes Trägermaterial wie Gestein, Kieselgur, Aktivkohle oder Kunststoff mit wäßrigem Weißkalkhydrat beschichtet. Ein mit diesem Material befüllter Reaktor wird von dem zu reinigenden Rauchgas durchströmt, wobei an der Oberfläche des beschichteten Trägermaterials zunächst Calciumsulfit gebildet wird, welches durch den im Rauchgas vorhandenen Restsauerstoff zu Calciumsulfat oxidiert wird. Auf mechanische Weise wird die äußere Gipsschicht vom inerten Trägermaterial entfernt, worauf dieses erneut mit Weißkalkhydrat beschichtet wird und dem Reaktor wieder zugeführt wird.

Die Aufgabe bestand darin, ein Verfahren zu finden, mit dem sich in mit Calciumcarbonat oder Calciumhydroxid betriebenen Anlagen zur Absorption saurer Gase nach dem Naß- oder Trockenabsorptionsverfahren das Absorptionsvermögen dieser Anlagen steigern läßt.

Demgemäß wurde das oben beschriebene Verfahren gefunden, das dadurch gekennzeichnet ist, daß man die Absorption in Gegenwart von Carboxylgruppen tragenden Polymeren vornimmt.

Die erfindungsgemäß zu verwendenden Carboxylgruppen tragenden Polymere enthalten Carboxylgruppen oder deren Salze mit Alkalimetallen, Erdalkalimetallen, Ammoniak oder organischen Aminen. Sie können durch radikalische Polymerisation von mindestens einem carboxylgruppenhaltigen oder anhydridgruppenhaltigen ethylenisch ungesättigten Monomeren, wie Acrylsäure, Methacrylsäure, Crotonsäure, Fumarsäure, Maleinsäure, 2-Methylmaleinsäure, Itaconsäure, 2-Methylitaconsäure, α,β-Methylenglutarsäure, Citraconsäure, Maleinsäurehalbester, Fumarsäurehalbester oder deren Salzen, ethylenisch ungesättigten Anhydriden wie z.B. Maleinsäureanhydrid, Itaconsäureanhydrid, Acrylsäureanhydrid, Methacrylsäureanhydrid in einem Anteil von 1 bis 100 %, bezogen auf das Gewicht des Polymers, bevorzugt 30 bis 100 %, besonders bevorzugt 60 bis 100 % hergestellt werden.

Die carboxylgruppenhaltigen oder anhydridgruppenhaltigen ethylenisch ungesättigten Monomere können mit einem oder mehreren weiteren ethylenisch ungesättigten Comonomeren copolymerisiert werden. Solche Comonomere sind z.B.: C₁- bis C₂₀-Alkyl- und Hydroxyalkylester von monoethylenisch ungesättigten C₃- bis C₁₀-Monocarbonsäuren oder C₄- bis C₈-Dicarbonsäuren, wie z.B. Methylacrylat, Ethylacrylat, Butylacrylat, 2-Ethylhexylacrylat, Decylacrylat, Stearylacrylat, Methylmethacrylat, Butylmethacrylat, Isodecylmethacrylat, Hydroxyethylacrylat, Hydroxyethylmethacrylat, Hydroxypropylmethacrylat; weiterhin (Meth)Acrylsäureester von alkoxylierten C₁- bis C₁₈-Alkoholen, die mit 2 bis 50 Mol Ethylenoxid, Propylenoxid, Butylenoxid oder Mischungen davon umgesetzt sind; Alkylaminoalkyl(meth)acrylate, wie Dimethylaminoethylacrylat, Dimethylaminopropylmethacrylat; Sulfongruppen enthaltende monoethylenisch ungesättigte Monomere, wie Allylsulfonsäure, Vinylsulfonsäure, 2-Acrylamido-2-methylpropansulfonsäure, Methallylsulfonsäure, Acrylsäure-3-sulfopropylester und Methacrylsäure-3-sulfopropylester; weiterhin Amide und N-substituierte Amide von monoethylenisch ungesättigten C₃- bis C₁₀-Monocarbonsäuren oder C₄- bis C₈-Dicarbonsäuren, z.B. Acrylamid, Methacrylamid, N-Alkylacrylamide oder N,N-Dialkylacrylamide, wie N-Methylacrylamid, N,N-Dimethylacrylamid, N-tert.-Butylacrylamid, Dimethylaminopropylmethacrylamid; weiterhin N-Vinyl-Verbindungen, z.B. N-Vinylpyrrolidon, N-Vinylcaprolactam, N-Vinylformamid, N-Vinyl-N-methylformamid, 1-Vinylimidazol oder 1-Vinyl-2-methylimidazol; Styrol oder substituierte Styrole, Butadien, Vinylacetat oder andere Vinylester, Acrylnitril oder Methacrylnitril; lineare, verzweigte oder cyclische Olefine, wie z.B. Ethen, Propen, Buten, Isobuten, Penten, Isopenten, Hexen, Diisobuten, Cyclopenten, Cyclopentadien, Dicyclopentadien und Inden; Vinylether von C₁- bis C₁₈-Alkoholen wie Methylvinylether, Ethylvinylether, Vinylether von alkoxylierten C₁- bis C₁₈-Alkoholen und Vinylether von Polyalkylenoxiden wie Polyethylenoxid, Polypropylenoxid oder Polybutylenoxid.

Die Carboxylgruppen tragenden Polymere können ein Molekulargewicht (Gewichtsmittel) von 300 bis 1.000.000, bevorzugt von 500 und 50.000 und besonders bevorzugt von 1000 bis 15.000 aufweisen.

Vorzugsweise werden verwendet: Homo- und Copolymerisate der Acrylsäure, Methacrylsäure und deren Salze, Homo- und Copolymerisate von Maleinsäure oder Maleinsäureanhydrid, wobei ein Teil, in der Regel 1 bis 50 %, der Carboxylgruppen verestert vorliegen kann. Als Alkohole zur Veresterung eignen sich vorzugsweise C₁- bis C₁₈-Alkohole oder alkoxylierte C₁- bis C₁₈-Alkohole. Ein Teil der Carboxylgruppen kann auch in Form von Alkali-, Erdalkali- oder Ammoniumsalzen vorliegen.

Verwendet werden können auch wasserlösliche gepfropfte Naturstoffe, die durch Polymerisieren von monoethylenisch ungesättigten Carbonsäuren und gegebenenfalls anderen Monomeren in Gegenwart von Monosacchariden, Oligosacchariden, Polysacchariden und/oder Derivaten davon erhältlich sind. Als Monomere können die obengenannten carboxylgruppenhaltigen Monomere, gegebenenfalls in Kombination mit einem oder mehreren weiteren Monomeren ausgewählt werden. Als Pfropfgrundlage dienen Monosaccharide, Oligosaccharide, Polysaccharide, oxidativ, hydrolytisch oder enzymatisch abgebaute Polysaccharide, oxidierte hydrolytisch oder oxidierte enzymatisch abgebaute Polysaccharide, chemisch modifizierte Mono-, Oligo- und Polysaccharide oder Mischungen der genannten Verbindungen. Vom wirtschaftlichen Standpunkt aus gesehen verwendet man als Polysaccharide vorzugsweise Stärke, thermisch und/oder mechanisch behandelte Stärke, oxidativ, hydrolytisch oder enzymatisch abgebaute Stärke, oxidierte hydrolytisch oder oxidierte enzymatisch abgebaute Stärken sowie chemisch modifizierte Stärken und chemisch modifizierte Monosaccharide und Oligosaccharide. Beispielhaft seien hier genannt: Dextrine, wie Weiß- und Gelbdextrine, Maltodextrine, Glucosesirup, Maltosesirup, Maltose, D-Glucose, Fructose, Mono- und Oligosaccharide, wie Galactose, Mannose, Ribose, Saccharose, Raffinose, Lactose und Trehalose sowie Abbauprodukte der Cellulose, beispielsweise Cellobiose und ihre Oligomeren.

Weiterhin können als Pfropfgrundlage auch chemisch modifizierte Polysaccharide verwendet werden, z.B. Carboxymethylcellulose, Hydroxyethylcellulose, Hydroxypropylcellulose, Carboxymethylhydroxyethylcellulose, Sulfoethylcellulose, Carboxymethylsulfoethylcellulose.

Als Initiatoren für die radikalische Polymerisation der genannten Carboxylgruppen tragenden Monomere kommen hierfür gebräuchliche Verbindungen in Betracht, die unter den Polymerisationsbedingungen Radikale bilden, z.B. Peroxide, Hydroperoxide, Peroxodisulfate, Percarbonate, Peroxiester, Wasserstoffperoxid und Azoverbindungen. Beispiele für Initiatoren sind Wasserstoffperoxid, Dibenzoylperoxid, Dicyclohexylperoxidicarbonat, Dilaurylperoxid, Methylethylketonperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butylperbenzoat, Lithium-, Natrium-, Kalium- und Ammoniumperoxidisulfat, Azoisobutyronitril, 2,2'-Azobis(2-amidinopropan)dihydrochlorid, 2-(Carbamoylazo)isobutyronitril und 4,4'-Azobis(4-cyanovaleriansäure). Die Initiatoren werden üblicherweise in Mengen bis 15 Gew.-% bezogen auf die Monomere eingesetzt, vorzugsweise in Mengen von 0,2 bis 5 Gew.-%.

Die oben genannten Initiatoren können allein oder in Mischung miteinander eingesetzt werden. Auch die Anwendung der bekannten Redoxkatalysatoren, bei denen die reduzierende Komponente im molaren Unterschuß angewendet wird, sind geeignet. Bekannte Redoxkatalysatoren sind z.B. Salze von Übergangsmetallen wie Eisen-II-sulfat, Kobalt-II-chlorid, Nickel-II-sulfat, Kupfer-I-chlorid, Mangan-II-acetat, Vanadin-III-acetat. Als Redoxkatalysatoren kommen weiterhin reduzierend wirkende Schwefelverbindungen, beispielsweise Sulfite, Bisulfite, Thiosulfate, Dithionite und Tetrathionate von Alkalimetallen und Ammoniumverbindungen oder reduzierend wirkende Phosphorverbindungen wie Natriumhydrophosphit, phosphorige Säure und Phosphite in Betracht.

Um das Molekulargewicht der erfindungsgemäß zu verwendenden Polymere zu steuern, kann man die Polymerisation gegebenenfalls in Gegenwart von Reglern durchführen. Als Regler eignen sich beispielsweise Aldehyde wie Formaldehyd, Acetaldeyhd, Propionaldehyd, n-Butyraldehyd und Isobutyraldehyd, Ameisensäure, Ammoniumformiat, Hydroxylammoniumsulfat und Hydroxylammoniumphosphat. Weiterhin kommen Verbindungen in Betracht, die Schwefel in gebundener Form enthalten, wie SH-Gruppen aufweisende Verbindungen, beispielsweise Thioglykolessigsäure, Mercaptopropionsäure, Mercaptoethanol, Mercaptopropanol, Mercaptobutanole, Mercaptohexanol, Dodecylmercaptan und tert.-Dodecylmercaptan in Betracht. Als Regler können weiterhin eingesetzt werden: Ein- und mehrwertige Alkohole mit bis zu 6 C-Atomen wie Isopropanol, n-Butanol, Butenole, Isobutanol, Glykol, Glycerin und Pentaerythrit sowie Salze des Hydrazins, z.B. Hydraziniumsulfat. Die Polymerisation kann gegebenenfalls in Anwesenheit eines regelnd wirkenden Lösungsmittels, wie z.B. Isopropanol, Ethylbenzol oder Xylol ausgeführt werden.

Die Herstellung der Polymerisate erfolgt nach den bekannten Verfahren, wie Lösungs-, Emulsions-, Fällungs- Suspensions- oder Substanzpolymerisation. Die Polymerisate werden vorzugsweise als wäßrige Lösungen eingesetzt.

Die Carboxylgruppen tragenden Polymere können den Absorptionsmitteln auf Basis von Calciumcarbonat oder Calciumhydroxid in Mengen von 1 bis 50.000 ppm, vorzugsweise 10 bis 10.000 ppm, bezogen auf den Gehalt an Calciumcarbonat oder Calciumhydroxid, zugesetzt werden.

In Naßabsorptionsverfahren kann die Zugabe der Polymeren direkt in die zur Absorption der sauren Gase verwendeten Suspensionen erfolgen. In den Trockenverfahren, die bevorzugt werden, kann das Polymer der Suspension zugesetzt werden, die zur Beschichtung der inerten Trägermaterialien mit dem Absorptionsmittel dient und mit diesem auf dem Träger abgeschieden werden. Die Absorption der sauren Gase erfolgt in an sich bekannter Weise.

Absorbiert werden können alle Gase, die mit Calciumhydroxid oder Calciumcarbonat unter den Absorptionsbedingungen reagieren können. Bevorzugt handelt es sich dabei um Schwefeldioxid, aber auch Gase wie Chlorwasserstoff, Fluorwasserstoff und Schwefeltrioxid kommen in Betracht. Bevorzugt ist die Absorption von sauren Gasen aus Rauchgasen.

Das erfindungsgemäße Verfahren führt zu einer Erhöhung des Absorptionsvermögens von Absorptionsmitteln auf Basis von Calciumhydroxid und Calciumcarbonat. In bestehenden Anlagen läßt sich dadurch in einfacher Weise die Kapazität der Absorptionseinrichtungen für saure Gase erheblich steigern.

### Beispiel

In einer Rauchgasreinigungsanlage, die mit Calciumhydroxid beschichteten Keramikgranulat als trockene Absorptionsmittel, wie es in der DE-A 36 41 205 beschrieben wird, betrieben wurde, wurde Rauchgas mit einem Gehalt von 2800 mg/m³SO₂ und 280 mg/m³ SO₃ (trocken) gereinigt.

Das gereinigte Gas enthielt nach dem Passieren der Rauchgasreinigungsanlage ohne Zusatz von erfindungsgemäßen Polymeren 480 mg/m³SO₂. Mit Zusatz von 80 ppm Polyacrylsäure (Polyacrylsäure (fest) bezogen auf Calciumhydroxid (fest), die gemäß Beispiel 1 der DE-A 27 57 329 hergestellt wurde, betrug der Gehalt an SO₂ 280 mg/m³ und der an SO₃ <2 mg/m³.

## Patentansprüche

1. Verfahren zur Absorption von sauren Gasen mit Absorptionsmitteln auf Basis von Calciumnydroxid oder Calciumcarbonat, dadurch gekennzeichnet, daß man die Absorption in Gegenwart von Carboxylgruppen tragenden Polymeren vornimmt.

2. Verfahren nach Anspruch 1, dadurch gekennzeichnet, daß man saure Gase aus Rauchgasen absorbiert.

3. Verfahren nach Anspruch 2, dadurch gekennzeichnet, daß man die Absorption nach einem Trockenabsorptionsverfahren an mit Calciumnydroxid beschichteten inerten Trägermaterialien vornimmt.

4. Verfahren nach den Ansprüchen 1 bis 3, dadurch gekennzeichnet, daß man die Absorption in Gegenwart von 10 bis 10.000 ppm eines Carboxylgruppen tragenden Polymeren, bezogen auf den Gehalt an Calciumhydroxid oder Calciumcarbonat, vornimmt.

5. Verfahren nach den Ansprüchen 1 bis 4, dadurch gekennzeichnet, daß man ein Carboxylgruppen tragendes Polymer mit einem mittleren Molekulargewicht (Gewichtsmittel) von 1000 bis 15.000 verwendet.

6. Verfahren nach den Ansprüchen 1 bis 5, dadurch gekennzeichnet, daß man als Carboxylgruppen tragendes Polymer Homo- oder Copolymere mit einem Gewichtsanteil von mindestens 60 % an Acrylsäure, Methacrylsäure, Maleinsäure oder Maleinsäureanhydrid verwendet.

7. Verfahren nach Anspruch 6, dadurch gekennzeichnet, daß man als Carboxylgruppen tragendes Polymer Polyacrylsäure verwendet.

8. Verwendung von Carboxylgruppen tragenden Polymeren zur Erhöhung des Absorptionsvermögens von Absorptionsmitteln auf Basis von Calciumhydroxid oder Calciumcarbonat für saure Gase.
